# EUROPEAN PATENT APPLICATION

(11) **EP 2 592 715 A2**
(43) Date of publication of application: **15.05.2013**
(21) Application number: 12191491.5
(22) Date of filing: 06.11.2012
(51) Int. Cl.: H02J 7/02

(54) **Wireless charging system and method**

(30) Priority: 10.11.2011 TW 100141016
(71) Applicant: Acer Incorporated, Taipei Hsien 221 (TW)
(72) Inventor: Lin, Yung-Sen, 221 Hsichih, Taipei Hsien (TW)
(74) Representative: 2K Patentanwälte Blasberg Kewitz & Reichel

(57) **Abstract**

The present invention provides a wireless charger including a sensing device, a charging coil array and a processor. The sensing device determines the shape of the recharging area of an electronic device placed on the wireless charger. The charging coil array includes a plurality of dynamic charging coils and selectively turns on a part of the dynamic charging coils. The processor drives the part of the dynamic charging coils to charge the electronic device by wireless charging, wherein the part of the dynamic charging coils of the charging coil array is corresponding to the shape of the recharging area.

## Description

### CROSS REFERENCE TO RELATED APPLICATIONS

This Application claims priority of Taiwan Patent Application No. 100141016, filed on November 10, 2011, the entirety of which is incorporated by reference herein.

### BACKGROUND OF THE INVENTION

### FIELD OF THE INVENTION

The present invention relates to a wireless charger, and in particular relates to a wireless charger executing a wireless charging of an electronic device according to the shape of the electronic device.

### DESCRIPTION OF THE RELATED ART

Generally, battery-powered devices (such as wireless electronic devices) need a matched adapter which usually is an AC power cord. If a plurality of devices need to charge at the same time, the traditional cable-configuration chargers will become difficult to use.

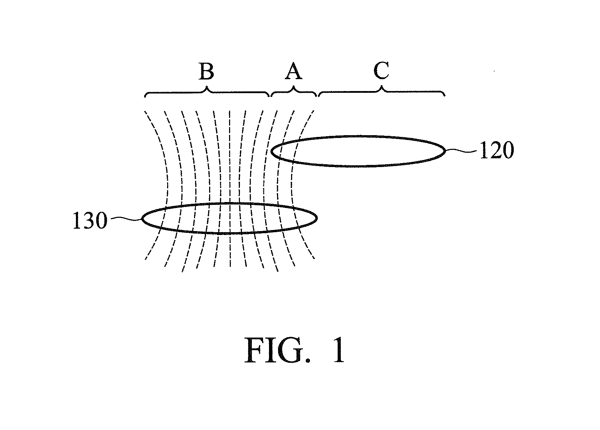

Another method of charging battery-powered device is wireless energy transmission technology. The wireless energy transmission technology is based on the inductive coupling and the electromagnetic sensing between the transmitting antenna (that is, charging coil) embedded in the wireless charger (i.e. charging pads) and the receiving antenna (i.e. inductive charging coil) embedded in the electronic device. The transmitting antenna and receiving antenna must be very close, such as a few thousandths of a meter. Therefore, the user must ensure that the receiving antenna of the electronic device will be placed at the top of the transmitting antenna of the wireless charger. As shown in FIG. 1, during the fully effectively charging situation, the receiving antenna 120 should be influenced by the magnetic field of the transmitting antenna 130 in the area A and area C, but the receiving antenna 120 of FIG. 1 is not placed at the top of the transmitting antenna 130 of the electronic device. Therefore, the receiving antenna 120 is only influenced by the magnetic field from transmitting antenna in the area A, and the electronic device cannot be fully effectively charged. Furthermore, part of the transmitting antenna 130 which is not covered by the receiving antenna 120 in the area B emits an invalid magnetic field. The invalid magnetic field is not only wasting energy but also jeopardizing the health of users.

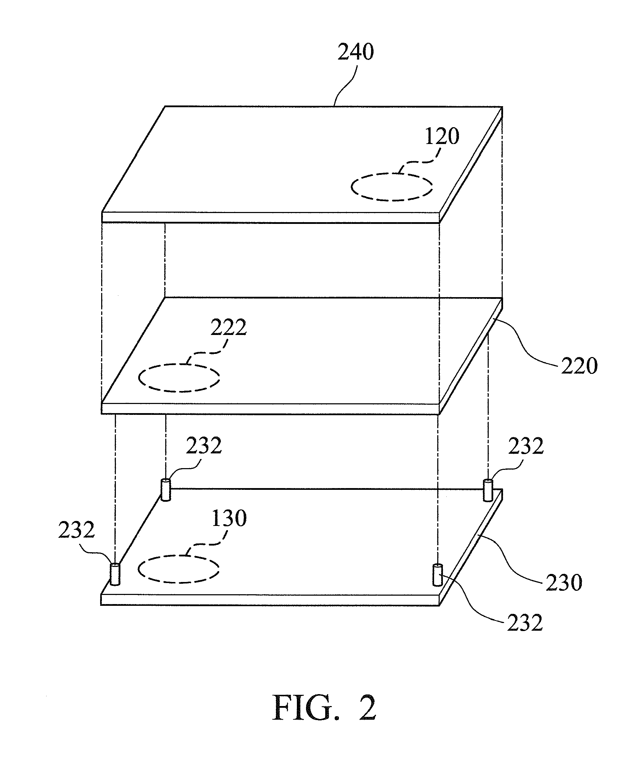

As shown in FIG. 2, the prior solution for the above problem is to apply a foolproof design in the mechanism, such as the locks 232 that are disposed on the wireless charger 230. Therefore, the user must place the electronic device 220 between the locks 232 accurately to let the receiving antenna 222 of the electronic device 220 right on the top of the transmitting antenna 130 of the wireless charger 230 fully effectively charge the electronic device 220. The solution limits the shape of the wireless charger 230 due to the case shape of the electronic device 220. For example, if the shape of the electronic device 220 does not match the locks 232 of the wireless charger 230, the electronic device 220 cannot be charged by the wireless charger 230. In addition, although an electronic device 240 having the same case shape as the electronic device 220 is accurately placed in the locks 232, the electronic device 240 may not be charged by the wireless charger 230 when the receiving antenna 120 of the electronic device 240 is not above the transmission antenna 130 of the wireless charger 230. Therefore, the prior solution cannot fully effectively charge the electronic device 240 and avoid endangering the user's health. Furthermore, the wireless charger 230 cannot charge more than one electronic device 220 at the same time.

In summary, the wireless charger 230 is compatible with the electronic device 220, but not compatible with the electronic device 240 having a different version from the electronic device 220. Furthermore, the wireless charger 230 can not charge more than one electronic device 220 at a time. Therefore, the wireless charger 230 does not provide economic benefits and meet user needs. Furthermore, the inappropriate use of the wireless charger 230 may put the user's physical health at risk.

Therefore, the purpose of present invention is to provide a wireless charging method to solve the above problem.

### BRIEF SUMMARY OF THE INVENTION

A detailed description is given in the following embodiments with reference to the accompanying drawings.

An exemplary embodiment provides a wireless charger including a sensing device, a charging coil array and a processor. The sensing device determines the shape of the recharging area of an electronic device placed on the wireless charger. The charging coil array includes a plurality of dynamic charging coils and selectively turns on a part of the dynamic charging coils. The processor drives the part of the dynamic charging coils to charge the electronic device by wireless charging, wherein the part of the dynamic charging coils of the charging coil array correspond to the shape of the recharging area.

Additionally, another exemplary embodiment provides an electronic device including an inductive charging coil and an RFID tag coil. The inductive charging coil produces an induced current due to a magnetic field induced by a wireless charger, provides the induced current to charge the electronic device. The RFID tag coil is disposed above or under the inductive charging coil, and covers the area of the inductive charging coil, and represents the shape of a recharging area.

Moreover, another exemplary embodiment provides a wireless charging system including a sensing device, a charging coil array, a processor, and an inductive charging coil. The sensing device determines the shape of the recharging area of an electronic device placed on the wireless charger. The charging coil array includes a plurality of dynamic charging coils. The charging coil array selectively turns on a part of the dynamic charging coils to induce a magnetic field. The processor drives the part of the dynamic charging coils to charge the electronic device by wireless charging, wherein the part of the dynamic charging coils of the charging coil array corresponds to the shape of the recharging area. The inductive charging coil is disposed in the electronic device and produces an induced current due to the magnetic field. The inductive charging coil provides the induced current to charge the electronic device and supply power to the electronic device.

Furthermore, another exemplary embodiment provides a wireless charging method, in which the shape of the recharging area of an electronic device is determined when the electronic device is placed on a wireless charger and a plurality of dynamic charging coils in a charging coil array are selectively turned on according to the shape of the recharging area of the electronic device to induce a magnetic field to charge the electronic device.

### BRIEF DESCRIPTION OF THE DRAWINGS

The present invention can be more fully understood by reading the subsequent detailed description and examples with references made to the accompanying drawings, wherein:

FIG. 1 is a schematic diagram illustrating a prior wireless charging system;

FIG. 2 is a schematic diagram illustrating a prior wireless charging system;

FIG. 3 is a schematic diagram illustrating an embodiment of a wireless charging system of the present invention;

FIG. 4 is a schematic diagram illustrating an embodiment of a wireless charger of the present invention;

FIG. 5 is a schematic diagram illustrating an embodiment of an electronic device of the present invention;

FIG. 6 is a schematic diagram illustrating an embodiment of a wireless charging system of the present invention;

FIG. 7 is a schematic diagram illustrating another embodiment of the wireless charging system of the present invention; and

FIG. 8 is a flowchart of a wireless charging method according to an embodiment of the present invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

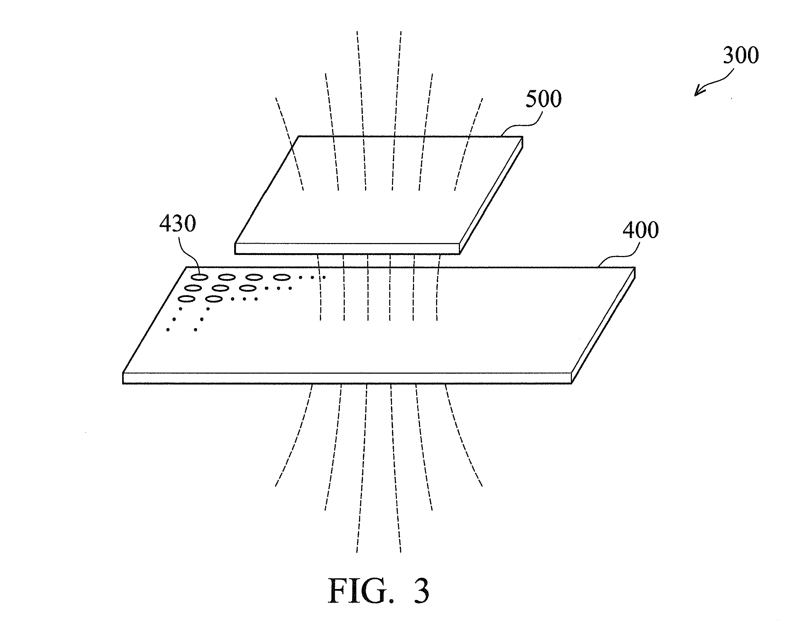

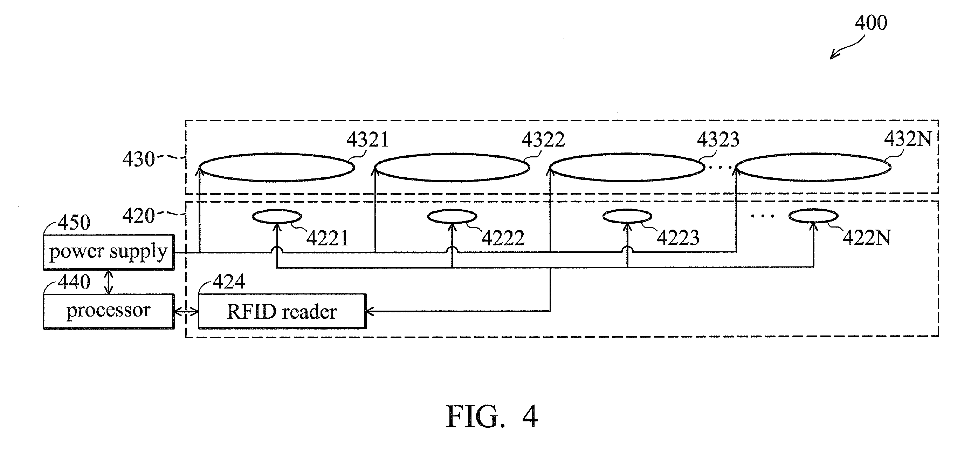

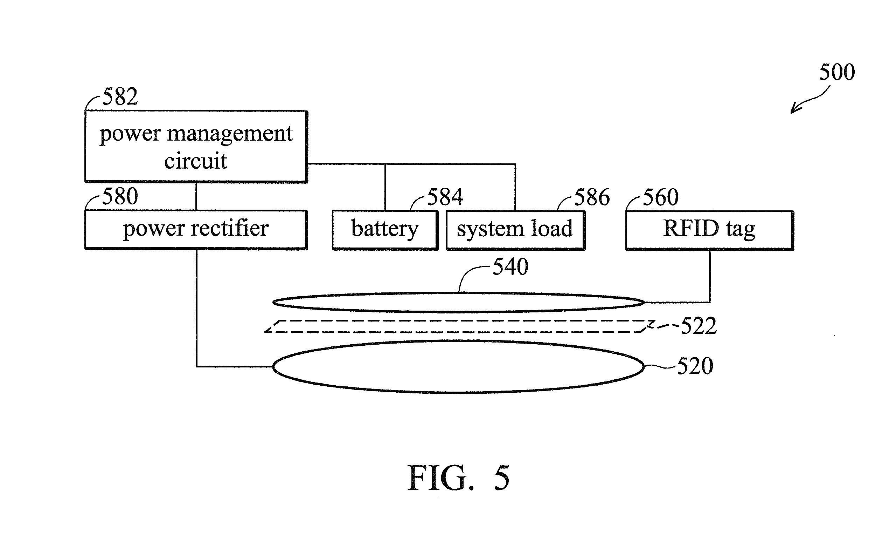

As shown in the FIG. 3, the present invention discloses a schematic diagram of a wireless charging system. The wireless charging system 300 includes a wireless charger 400 and an electronic device 500, wherein the electronic device 500 includes a charging coil array 430. The wireless charger 400 determines the shape of the recharging area of the electronic device 500 when the electronic device 500 is placed on (or near) the top of the wireless charger 400. The wireless charger 400 turns on a part of the charging coil array 430 corresponding to the shape of recharging area. After being conducted, the coils which are part of the charging coil array 430 induce a magnetic field to charge the electronic device 500, wherein the part of the charging coil array 430 correspond to the shape of the recharging area. Therefore, in the area of the charging coil array 430, the wireless charging system 300 can be compatible with electronic devices of different shapes and designs, and charge more than one electronic device via wireless charging at the same time. As per the description above, the wireless charging system 300 can provide economic benefits and meet user needs. Furthermore, the wireless charging system 300 can reduce the physical health hazards which are produced by inappropriate usage. It should be noted that the details of the electronic device 500 and the wireless charger 400 can be referred to in the description of FIG.4 and FIG. 5.

FIG. 4 is a schematic of the wireless charger 400 of an embodiment in the present invention. The wireless charger 400 includes a sensing device 420, a charging coil array 430, a processor 440 and a power supply 450. The sensing device 420 determines the shape of the electronic device 500 placed on the top of the wireless charger 400. The charging coil array 430 includes a plurality of dynamic charging coils 4321~432N. The charging coil array 430 can selectively turn on a part of the dynamic charging coils 4321~432N. The sensing device 420 includes the RFID reader coils 4221~422N and the RFID reader 424, which are suitable in the RFID system (Radio-frequency identification, RFID). The RFID reader coils 4221~422N are disposed under each of the dynamic charging coils 4321~432N respectively to receive RFID data from the electronic device 500. The RFID reader 424 reads the RFID data received by each of the RFID reader coils 4221~422N. The processor 440 defines each of the dynamic charging coils 4321~432N of the charging coil array 430 as enable or disable according to the shape of the recharging area of the electronic device 500. The dynamic charging coils 4321~432N charge the electronic device 500 by wireless charging. The power supply 450 transmits power to the dynamic charging coils 4321~432N according to the command from the processor 440.

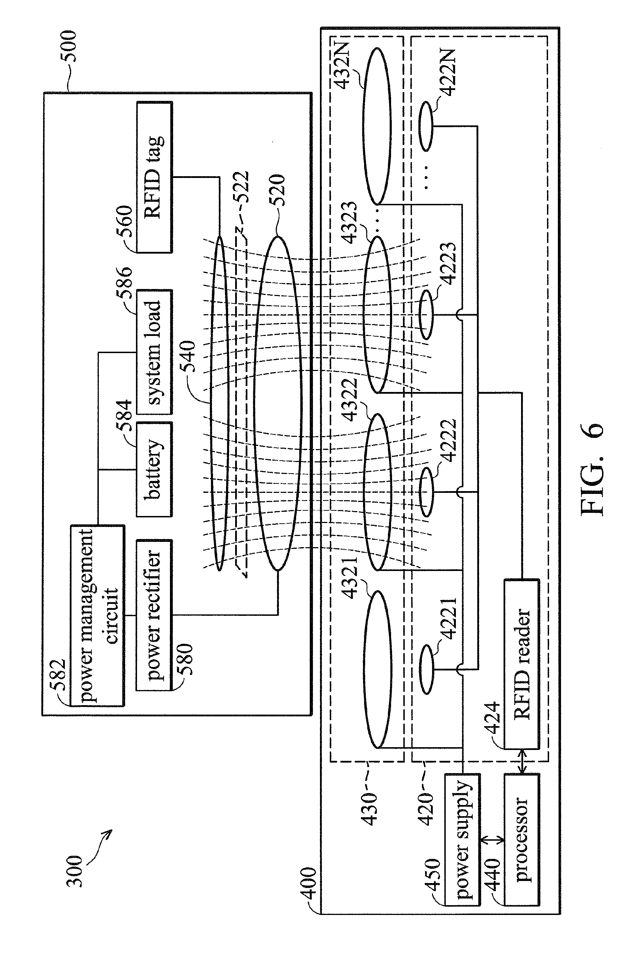

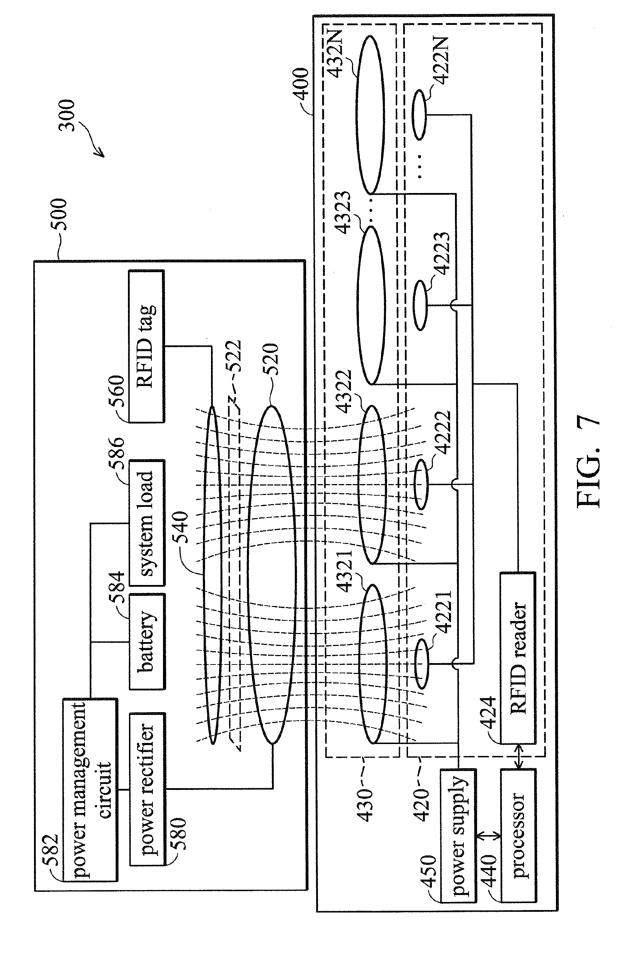

It should be noted that the RFID reader coils 4221~422N of this embodiment are disposed under each of the dynamic charging coils 4321~432N. In another embodiment, the RFID reader coils 4221~422N are disposed above each of the dynamic charging coils 4321~432N respectively. In addition, the sensing device 420 is applied to the RFID reader coils 4221~422N of the RFID system, but the present invention is not limited thereto. In another embodiment, the sensing device 420 can be a sensor which is implemented to determine the shape of the recharging area when the electronic device 500 is placed on it. The sensing device 420 can be a piezoelectric sensor with a piezoelectric sensor array, resistive sensors, or capacitive sensors, etc. The principle of determining the shape of the recharging area by using the RFID reader coils 4221~422N is referred to in the description related to FIG. 6 and FIG. 7.

FIG. 5 is a schematic of an electronic device 500 of an embodiment in the present invention. The electronic device 500 includes an inductive charging coil 520, an RFID tag coil 540, an RFID tag 560, a power rectifier 580, a power management circuit 582, a battery 584 and a system load 586. The inductive charging coil 520 produces an induced current due to a magnetic field induced by a wireless charger 400, and provides the induced current to the power rectifier 580. The power rectifier 580 adjusts the induced current to become a stable power suitable with the electronic device 500, and provides the stable power to charge the electronic device 500 and supply power for the electronic device 500. For example, the power rectifier 580 can transmit the power suitable to the electronic device 500 to the power management circuit 582 after adjusting the induced current to the power appropriate to the electronic device 500. The power management circuit 582 transmits the stable power suitable to the electronic device 500 to charge and/or supply power to the battery 584 of the electronic device 500 according to different needs.

The location of the RFID tag coil 540 is designed according to the shape of the inductive charging coil 520 of the electronic device 500. The RFID tag coil 540 is disposed above or under the inductive charging coil 520 and covers the area 522 of the inductive charging coil 520, wherein the area 522 represents the shape of the recharging area, and the recharging area is the effectively the recharging area of the electronic device 500. The area 522 is the scope of the magnetic field which can influence the inductive charging coil 520 and designed by the circuit designer, but it is not limited thereto. In the better embodiment of the present invention, the area 522 of the inductive charging coil 520 is the same size as the area of the inductive charging coil 520 and overlaps the area of the inductive charging coil 520. In some embodiments, the area 522 can be smaller or bigger than the area of the inductive charging coil 520. The RFID tag 560 stores the RFID data of the electronic device 500, wherein the RFID data includes the identification data for the type of electronic device 500. It should be noted that the step of determining the shape of the recharging area of the electronic device 500 in this embodiment is not according to the RFID data of the electronic device 500. The details of determining the shape of the recharging area by the RFID tag coil 540 and the RFID tag 560 are referred to in the instructions in FIG. 6 and FIG. 7.

FIG. 6 is a schematic diagram illustrating an embodiment of a wireless charging system 300. The wireless charging system 300 includes the wireless charger 400 of FIG. 4 and the electronic device 500 of FIG. 5. The circuits and features of the wireless charger 400 and the electronic device 500 are referred to in the instructions in FIG. 4 and FIG. 5. The RFID reader coils 4222 and 4223 of the sensing device 420 in the wireless charger 400 influence the RFID tag coil 540 of the electronic device 500 by magnetic field when the electronic device 500 is placed on (or near) the wireless charger 400, such that the RFID reader coils 4222 and 4223 of the wireless charger 400 receive the RFID data from RFID tag 560 by RFID tag coil 540. It should be noted that the other RFID reader coils 4221 and 4224~422N are not under the area 522, and thus the RFID reader coils 4221 and 4224~422N do not influence the RFID tag coil 540 or receive RFID data from the RFID tag coil 540.

There are only some dynamic charging coils which are near (under) the inductive charging coil 520 in the dynamic charging coils 4321~432N that can influence the inductive charging coil 520 by a magnetic field to charge the electronic device 500. Therefore, the area 522 represents the shape of the recharging area of the electronic device 500 and the area 522 which will be effectively charged. Since the disposition of the RFID tag coil 540 corresponds to the shape of the inductive charging coil 520 of the electronic device 500 (i.e. the RFID tag coil 540 may cover the area 522 of the inductive charging coil 520), the RFID reader coils 4222 and 4223, which are near the RFID tag coil 540 and have read the RFID data, are used to determine the shape of recharging area of the electronic device 500 and the effective charging area. The RFID reader coils 4222 and 4223, which have read the RFID data, are defined as an effective set to indicate the shape of the recharging area of the electronic device 500 and the effective charging area 522 which will be effectively charged.

The processor 440 defines the status of the dynamic charging coils 4321~432N above the RFID reader coils 4221~422N respectively according to whether the RFID reader coils 4221~422N receive the RFID data or not. The processor 440 defines the dynamic charging coils 4322 and 4323, which have received the RFID data and above the RFID reader coils 4222 and 4223, as enable, and defines the dynamic charging coils 4321 and 4324~432N, which have not received the RFID data and above the RFID reader coils 4221 and 4224~422N, as disable.

The processor 440 drives the power supply 450 to transmit power to the dynamic charging coils 4322 and 4323 after defining the status of the dynamic charging coils 4321~432N, wherein the dynamic charging coils 4322 and 4323 correspond to the shape of recharging area. More specifically, the processor 440 drives the power supply 450 to transmit power to the dynamic charging coils 4322 and 4323 defined as enable according to the effective set. At the same time, the dynamic charging coils 4322 and 4323 are enabled to induce a magnetic field, and the inductive charging coil 520 is influenced by the magnetic field produced by the dynamic charging coils 4322 and 4323 corresponding to the effective set. Therefore, the inductive charging coil 520 produces an induced current. The induced current charges the battery 584 of the electronic device 500 and supplies power to the system load 586 after being adjusted by the power rectifier 580. On the contrary, the dynamic charging coils 4321 and 4324~432N under (or above in the other embedment) the RFID reader coils 4222 and 4223, which are not included in the effective set, will not conduct to result in an invalid charging.

FIG. 7 is a schematic diagram illustrating an embodiment of a wireless charging system 300, and similar to FIG. 6. In this embodiment, the electronic device 500 is placed at the top of (or near) the RFID reader coils 4221 and 4222 rather than the RFID reader coils 4222 and 4223, and the RFID reader coils 4221 and 4222 of the wireless charger 400 affect the RFID tag coil 540 of the electronic device 500 with a magnetic field. Therefore, the processor 440 defines the dynamic charging coils 4321 and 4322 as enable, and the RFID reader coils 4221 and 4222 are defined as an effective set. The processor 440 drives the power supply 450 to transmit power to the dynamic charging coils 4321 and 4322 after defining the dynamic charging coils 4321 and 4322 as enable, wherein the dynamic charging coils 4321 and 4322 correspond to the shape of the recharging area. Although the relative position between the electronic device 500 and the wireless charger 400 in FIG. 7 is different from that in FIG. 6, the dynamic charging coils 4321~432N are adjusted dynamically, so that only the dynamic charging coils 4321 and 4322, which may induce a magnetic field to influence the inductive charging coil 520, will be enabled. Therefore, in the present embodiment, the charging action will not be invalid while charging the electronic device 500 by the wireless charger 400. In addition, multiple electronic devices 500 will be wirelessly charged safely and efficiently as long as the multiple electronic devices 500 are placed within the range of the charging coil array 430 in the wireless charger 400.

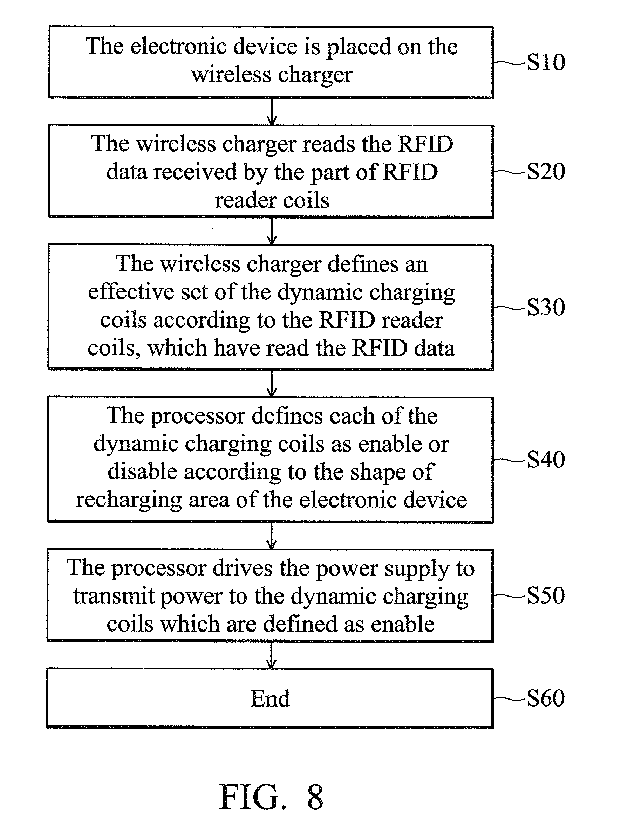

The present invention also provides a wireless charging method. The wireless charging method includes determining the shape of the recharging area of the electronic device 500 when the electronic device 500 is placed on the wireless charger 400, and selectively driving a plurality of dynamic charging coils 4321~432N of the charging coil array 430 according to the shape of the recharging area to induce a magnetic field to charge the electronic device 500 and supply power to the electronic device 500. FIG. 8 is a flowchart of the wireless charging method, and the process starts at step S 10. In step S 10, the electronic device 500 is placed on the wireless charger 400. Then, the process goes to step S20.

In step S20, the wireless charger 400 receives RFID data through (by) the magnetic field around a part of the RFID reader coils 4221~422N, and reads the RFID data received by the part of RFID reader coils 4221~422N.

Next, in step S30, the wireless charger 400 defines an effective set of the dynamic charging coils 4321~432N according to the RFID reader coils 4221~422N, which have read the RFID data. The effective set indicates the shape of the recharging area of the electronic device 500 and the area will be effectively charged. Therefore, the wireless charger 400 can determine the shape of the recharging area of the electronic device 500.

Next, in step S40, the processor 440 of the wireless charger 400 defines each of the dynamic charging coils 4321~432N of the charging coil array 430 as enable or disable according to the shape of the recharging area of the electronic device 500. Based on the FIG. 7, the processor 440 defines the dynamic charging coils 4321~4322, which are above (or under) the effective set of dynamic charging coils 4321~432N, as enable, and defines the other dynamic charging coils 4323~432N as disable.

Next, in step S50, based on the FIG. 7, the processor 440 drives the power supply 450 to transmit power to the dynamic charging coils 4321~4322, which are defined as enable. Namely, the processor 440 drives the power supply 450 to transmit power to the dynamic charging coils 4321~4322, which are above or under the RFID reader coils 4221~4222 respectively, according to the effective set. Therefore, the wireless charger 400 induces a magnetic field by the driven dynamic charging coils 4321~4322 to influence the inductive charging coil 520 of the electronic device 500 and charge the electronic device 500 by wireless charging and supply power to the electronic device 500. The process ends at step S50.

While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A wireless charger (400), comprising:
a sensing device (420), determining a shape of a recharging area of an electronic device placed on the wireless charger;
a charging coil array (430), comprising a plurality of dynamic charging coils, wherein the charging coil array selectively turns on a part of the dynamic charging coils; and
a processor (440), driving the part of the dynamic charging coils of the charging coil array to charge the electronic device by wireless charging, wherein the part of the dynamic charging coils of the charging coil array corresponds to the shape of the recharging area.

2. The wireless charger as claimed in claim 1, further comprising a power supply (450) to transmit power to the part, which corresponds to the shape of the recharging area, of the dynamic charging coils according to a command from the processor.

3. The wireless charger as claimed in claim 1 or 2, wherein the sensing device (420) further comprises:
a plurality of RFID reader coils (4221-N), receiving RFID data from an RFID tag coil (540) of the electronic device, wherein the RFID reader coils are disposed above or under each of the dynamic charging coils respectively; and
an RFID reader (424), reading the RFID data received by each of the RFID reader coils respectively, wherein the RFID reader coils which have received the RFID data are defined as an effective set, the effective set corresponds to the shape of the recharging area of the electronic device, and the processor drives the dynamic charging coils which are above or under the RFID reader coil according to the effective set.

4. The wireless charger as claimed in claim 3, wherein the RFID tag coil (540) of the electronic device is disposed according to a shape of an inductive charging coil (520) of the electronic device to cover the area of the inductive charging coil, and the inductive charging coil produces an induced current due to a magnetic field induced by the dynamic charging coils corresponding to the effective set, thereby charging the electronic device.

5. An electronic device, comprising:
an inductive charging coil (520), producing an induced current due to a magnetic field caused by a wireless charger, and providing the induced current to charge the electronic device; and
an RFID tag coil (540), representing a shape of a recharging area of the electronic device, wherein the RFID tag coil is disposed above or under the inductive charging coil and covers the shape of the recharging area of the electronic device.

6. The electronic device as claimed in claim 5, further comprising:
an RFID tag (560), storing RFID data of the electronic device; and
a power rectifier, adjusting the induced current.

7. An wireless charging system, comprising:
a sensing device (420), determining the shape of the recharging area of an electronic device placed on a wireless charger;
a charging coil array (430), comprising a plurality of dynamic charging coils, wherein the charging coil array selectively turns on a part of the dynamic charging coils to induce a magnetic field;
a processor (440), driving the part of the dynamic charging coils, which corresponds to the shape of the recharging area, to charge the electronic device by wireless charging; and
an inductive charging coil (520), producing an induced current due to the magnetic field to charge the electronic device, wherein the inductive charging coil is disposed in the electronic device.

8. The wireless charging system as claimed in claim 7, further comprising:
an RFID tag coil (540), representing the shape of the recharging area of the electronic device, wherein the RFID tag coil is disposed above or under the inductive charging coil of the electronic device and covers the area of the inductive charging coil;
a plurality of RFID reader coils (4221-N), receiving RFID data from the RFID tag coil, wherein the RFID reader coils are disposed under or above each of the dynamic charging coils respectively; and
an RFID reader (424), reading the RFID data received by each of the RFID reader coils, wherein the RFID reader coils which have received the RFID data are defined as an effective set corresponding to the shape of the recharging area of the electronic device, and the processor drives the dynamic charging coils which are disposed under or above the RFID reader coils of the effective set.

9. A wireless charging method, comprising:
determining a shape of a recharging area of the electronic device when an electronic device is placed on a wireless charger; and
selectively turning on a plurality of dynamic charging coils of a charging coil array according to the shape of the recharging area of the electronic device to induce a magnetic field to charge the electronic device.

10. The wireless charging method as claimed in claim 9, wherein the step of selectively turning on the dynamic charging coils of the charging coil array according to the shape of the recharging area of the electronic device, further comprising:
utilizing a plurality of RFID reader coils to receive RFID data from an RFID tag coil around the RFID reader coils;
reading the RFID data received from each of the RFID reader coils;
defining the RFID reader coils having received the RFID data as an effective set, wherein the effective set corresponds to the shape of the recharging area of the electronic device; and
driving the dynamic charging coils which are above or under the RFID reader coils in the effective set, wherein the RFID reader coils are disposed above or under each of the dynamic charging coils respectively, and the RFID tag coil is disposed above or under the inductive charging coil of the electronic device and covers the area of the inductive charging coil to represent the shape of the recharging area of the electronic device.
